# EUROPÄISCHE PATENTSCHRIFT

(11) **EP 0 672 024 B1**
(45) Veröffentlichungstag und Bekanntmachung des Hinweises auf die Patenterteilung: **25.09.1996**
(21) Anmeldenummer: 93918998.1
(22) Anmeldetag: 15.09.1993
(51) Int. Cl.: C03C 13/00, C03B 37/01, C03B 37/03, C03B 37/12, C03C 25/00

(54) **KIESELSÄURESTAPELFASER-VORGARN**
TEXTILE SILICA SLIVER
RUBAN DE FIBRES DE SILICE

(30) Priorität: 01.12.1992 DE 4240354
(43) Veröffentlichungstag der Anmeldung: 20.09.1995
(73) Patentinhaber: ACHTSNIT, Hans-Dieter, D-63820 Elsenfeld-Eichelsbach (DE)
(72) Erfinder: ACHTSNIT, Hans-Dieter, D-63820 Elsenfeld-Eichelsbach (DE)
(86) Internationale Anmeldenummer: DE9300862
(87) Internationale Veröffentlichungsnummer: WO9412441

(56) Entgegenhaltungen:
- EP-A- 0 206 353
- FR-A- 2 446 334

## Beschreibung

Die Erfindung betrifft ein Kieselsäurestapelfaser-Vorgarn, dessen Herstellung, sowie die Verwendung von Kieselsäurestapelfaser-Vorgarn.

Textile Produkte aus Quarz, Kieselglas (Leached Silica) und Kieselsäure (Silica) sind z.T. seit langem bekannt. Sie werden nach unterschiedlichen Verfahren hergestellt und bestehen aus reinem bzw. fast reinem Siliciumdioxid. (Ullmanns Enzyklopädie der technischen Chemie, 4. Auflage (1977) Bd.ll, S.359-374, Verlag Chemie, Weinheim/Bergstr. und Melliand Textilber. 70 (1989), S.629-632)

In Anlehnung an Koch P.A.: Faserstofftabellen, Textilglasfasern (Z. ges. Textilind. 69 (1967), S.839-846) unterscheidet man je nach Art der Herstellung und Länge der Einzelfasern die Primärformen:
- Filament (Elementarfaden), Faser praktisch unbegrenzter Länge und bestimmten Faserdurchmessers und
- Stapelfaser, Faser endlicher Länge und bestimmten Faserdurchmessers. Zu den linienförmigen Erzeugnissen aus textilen Fasern zählt das
- Stapelfaser-Vorgarn (Faserband), aufgebaut aus einer unbestimmten Anzahl annähernd paralleler, nicht oder wenig miteinander verdrehter Stapelfasern. Das Stapelfaser-Vorgarn hat eine bestimmte Feinheit und ist Ausgangsmaterial aller Stapelfasergarne und -zwirne.

Textile Fasern werden zu linienförmigen textilen Produkten wie Garnen und zu flächenförmigen textilen Produkten wie Geweben oder Geflechten verarbeitet und können auch zur Verstärkung einer Matrix z.B. aus Kunststoff für das Herstellen von Verbundwerkstoffen eingesetzt werden.

Am Markt durchgesetzt haben sich sogenannte Quarzglas-Fasern und -Filamentgarne, die nach dem Stab-Abziehverfahren aus einer SiO₂-haltigen Schmelze bei Temperaturen über 2000°C hergestellt werden. Der technische Aufwand ist groß, sodaß die Preise für diese Produkte relativ hoch sind.

Man kann auch textile Glas-Fasern bzw. daraus hergestellte textile Produkte mit Säuren auslaugen (DE-OS 2 609 419, GB-PS 2 094 363).
So hergestellte textile Produkte aus Kieselglasfasern werden bis 1100°C eingesetzt, haben jedoch schwache mechanische Eigenschaften. Daher werden vorzugsweise schwere Gewebe um 600-1300 g/m² hergestellt. Eine vielfältige textile Verarbeitung entsprechender Garne konnte sich wegen der schwachen mechanischen Eigenschaften nicht durchsetzen.

Nach einem neuen Produktionsprozeß konnten Kieselsäurefasern unter vorteilhaften Bedingungen mit ausgezeichneten Eigenschaften hergestellt werden (DE-PS 2 900 990, DE-PS 2 900 991). Danach wird in einer ersten Stufe aus wäßrigem Natronwasserglas mit Hilfe eines Trockenspinnverfahrens ein Natronwasserglas-Filamentgarn mit der Abzugsgeschwindigkeit von mindestens 30 m/min (in einem Beispiel mindestens 350 m/min) hergestellt. Dieses hydrolyseempfindliche Produkt wird durch Behandeln mit wasserstoffionenhaltigen Säure- und/oder Salzlösungen bei einer Verweilzeit von 1 Minute bis zu 15 Minuten zu Kieselsäurefasern umgewandelt.

In der DE-PS 2 900 991 wird nicht näher darauf eingegangen, unter welchen Bedingungen die Natronwasserglasfasern direkt dem Behandlungsbad zugeführt werden: dies ist wegen der unterschiedlichen Geschwindigkeiten bzw. Verweilzeiten technisch nicht ohne weiteres verständlich. Auch wird in den Beispielen der DE-PS 2 900 991 von der Umsetzung "1 m langer Garnstücke" gesprochen und die Patentansprüche 6 bis 9 beziehen sich offensichtlich auf die Produktform "Faser" im Sinne Stapelfaser oder Faserkurzschnitt. Aus chemisch-physikalischen Gründen können textile Produkte aus Quarz, Kieselglas und Kieselsäure bis ca. 1100°C Verwendung finden. Darüber berichtet jedoch die DE-PS 2 900 991 nicht.

Glasstapelfaser-Vorgarn wird seit etwa 1943 in einem einzigen Verfahrensschritt nach dem Abzugstrommel-Verfahren hergestellt (DE-PS 715 884, GB-PS 755 626, DE-AS 1 199 935, DE-AS 1 270 748). Glas wird bei 1250°C bis 1300°C geschmolzen und aus Düsen mit Hilfe einer Abzugstrommel mit einer Geschwindigkeit v₁ bis zu ca 50 m/sec abgezogen. Die nebeneinander liegenden Glasfilamente werden mit Hilfe eines Schabers und unterstützt durch einen Luftstrom vor der vollständigen Umwicklung der Trommel laufend abgehoben und treten in die über die Trommel breite verlaufende Mündung eines konischen Sammelkanales ein.Das sich im Sammelkanal bildende Vorgarn (Faserband) wird seitlich aus dem verjüngten Ende des Sammelkanales mit einer gegenüber v₁ niedrigeren Geschwindigkeit v₂ bis zu 10 m/min abgezogen und aufgewickelt: "Abzugstrommel-Verfahren". Die Feinheit (tex) des Vorgarnes kann u.a. durch das Verhältnis v₁:v₂ eingestellt werden.

Bei dem Prozeß werden Glasfilamente vor der Abzugstrommel mit möglichst unter 1% Schlichte versehen, u.a. um im Glasstapelfaser-Vorgarn durch Haftung eine geeignete Festigkeit zu gewährleisten. Das so erzeugte Glasstapelfaser-Vorgarn besteht aus Fasern von etwa 50 bis 1000 mm Stapellänge. Nach Verdrehen erhält man Glasstapelfasergarne üblicherweise der Feinheit im Bereich 125 tex bis 2000 tex.

Preiswerte textile Erzeugnisse dieser Glasstapelfasergarne werden u.a. als Ersatz von Asbest z.B. für Dichtungen oder für die thermische Isolation mit Dauertemperaturbeständigkeit bis ca 300°C eingesetzt. Aus chemisch-physikalischen Gründen sind Produkte aus Glasstapelfasergarnen für Anwendungstemperaturen über 400°C bis 500°C nicht geeignet.

Textile Produkte aus Keramikfasergarnen finden bei Temperaturen über 400-500°C (z.T. als Asbestsubstitutionsprodukt) Anwendung. Keramikfasergarne werden u.a. aus keramischen Fasern unterschiedlicher Länge auf bekannten Anlagen (Vorgarnherstellung auf Krempelanlagen, Garnherstellung auf Ringspinnmaschinen) hergestellt. Abgesehen von technischen Einschränkungen bei der Verarbeitung und Anwendung stehen heute auch keramische Fasern - ähnlich den Asbestfasern - wegen ihrer lungengängigen Abmessungen in hohem Verdacht, die Gesundheit des Menschen zu gefährden und zu schädigen (Hodgson, A.A.: Alternatives to Asbestos, The Pros and Cons, in: Critical Reports on Applied Chemistry, Vol.26, John Wiley & Sons, Chichester, New York, 1989).

Die US-PS 3 760 049 beschreibt ein Verfahren zur kontinuierlichen Herstellung von hochtemperaturbeständigen oxidischen Filamentgarnen (continuous fibers, z.B. 3Al₂O₃ : 1B₂O₃ : 3SiO₂). Nach dem Trockenspinnverfahren hergestellte "green fibers" (v₁ = 40-60 m/min) werden spannungslos in Form von Schlingen auf einem Förderband durch Öfen transportiert (v₂ = ca 0,4 m/min). Durch thermische Zersetzung bei Temperaturen bis ca 1200°C werden organische Bestandteile - die das Spinnen durch Düsen ermöglichen - entfernt und die festigkeitsbestimmende kristalline Struktur wird gebildet.

Es ist bekannt, daß dieser Garntyp bis 1200°C und darüber eingesetzt werden kann. Hohe Rohstoff- und Verfahrenskosten bestimmen den hohen Verkaufspreis. Die Anwendung in der Hochtemperaturtechnik ist daher begrenzt. Stapelfasergarne sind nicht bekannt.

Es besteht somit ein Bedarf an preiswerten Stapelfaser-Vorgarnen bzw. Stapelfasergarnen, die sich zu vielfältigen textilen Produkten verarbeiten lassen und mit guten mechanischen Eigenschaften bei Temperaturen über 400-500°C eingesetzt werden können.

Aufgabe der Erfindung ist es deshalb, Kieselsäurestapelfaser-Vorgarne mit guten mechanischen Eigenschaften zur Verfügung zu stellen unter Berücksichtigung und Ergänzung der in DE-PS 2 900 991 gegebenen Lehre bezüglich trocken gesponnenem Wasserglasfilamentgarn und dessen Behandlung in wasserstoffionenhaltiger Säure- und/oder Salzlösung. Diese Aufgabe wird durch ein Kieselsäurestapelfaser-Vorgarn gemäß Anspruch 1 gelöst. Ein vorteilhaftes Verfahren zum Herstellen des erfindungsgemäßen Kieselsäurestapelfaser-Vorgarnes ist Gegenstand von Anspruch 2; besonders vorteilhafte Ausführungsformen sind Gegenstand der Ansprüche 3 bis 8. Die Ansprüche 9 und 10 betreffen besonders vorteilhafte Verwendungsmöglichkeiten der erfindungsgemäßen Kieselsäurestapelfaser-Vorgarne.

Neu ist die Kombination von Trockenspinnen von Natronwasserglas-Filamentgarn gefolgt von der kontinuierlichen Bildung eines Natronwasserglasstapelfaser-Vorgarnes nach dem "Abzugstrommel-Verfahren" und das direkte Zuführen in den Nachbehandlungsbereich.

Das aus Spinndüsen frisch gesponnene Natronwasserglas-Filamentgarn wird nach dem Durchgang durch einen Trockenschacht und nach dem Imprägnieren mit einer Schlichte von der rotierenden Trommel abgezogen. Bei der Zusammensetzung der Schlichte ist zu beachten, daß diese im später zu passierenden Säurebad löslich ist, um die Reaktion der Natronwasserglasfilamente nicht zu behindern. Als Schlichte kann z.B. die in DE-PS 2 900 990 angegebene wäßrige Präparation eingesetzt werden.

Die niedrigste Abzugsgeschwindigkeit beträgt 350 m/min, aber als günstig haben sich Abzugsgeschwindigkeiten v₁ von über 600 m/min jedoch unter 1200 m/min erwiesen. Sowohl bei zu niedrigen als auch bei zu hohen Geschwindigkeiten wird die Häufigkeit der Spinnstörungen so groß, daß eine betriebsmäßige Produktion erschwert wird.

Als besonders vorteilhaft hat sich die kurze Verweilzeit der Natronwasserglasfilamente auf der Abzugstrommel erwiesen, wodurch keine Schädigung der Filamente durch Luftfeuchte oder Kohlendioxid, die bekanntlich mit Natronwasserglas physikalisch und chemisch reagieren, auftritt.

Vor dem vollständigen Umlauf um die Trommel werden - wie oben beschrieben - die Filamente abgehoben, in einer Kammer verwirbelt und seitlich über einen Drallkopf mit einer gegenüber der Abzugsgeschwindigkeit v₁ kleineren Geschwindigkeit v₂ abgezogen. Über das Verhältnis der Garngeschwindigkeiten v₁ : v₂ kann die Feinheit des gebildeten Natronwasserglasstapelfaser-Vorgarnes beeinflußt werden.

Bei einer Geschwindigkeit unter 200 m/min verläuft das Einlaufen des Natronwasserglasstapelfaser-Vorgarnes in die Nachbehandlungsstrecke störungsfrei. Dadurch ergibt sich ein günstiges Verhältnis v₁:v₂ zwischen 5 und 10. Der Transport des Vorgarnes von der Abzugstrommel zur Nachbehandlungsstrecke kann auch durch einen Luftinjektor unterstützt werden.

Der offene Charakter des Natronwasserglasstapelfaser-Vorgarnes hat einen nicht erwarteten günstigen Einfluß auf die Geschwindigkeit der Umsetzung in der wäßrigen wasserstoffionenhaltigen Säure- oder Salzlösung. Die notwendige Verweilzeit kann auf unter eine Minute reduziert werden. Eine Verweilzeit von 20-30 sec. wurde als ausreichend festgestellt. Die kurze Verweilzeit hat vorteilhafte Auswirkungen auf Prozeßführung und Anlagengröße und damit auf die Gestehungskosten.

Das in der wäßrigen wasserstoffionenhaltigen Säure- oder Salzlösung gebildete Kieselsäurestapelfaser-Vorgarn wird auf Transportbändern in zick-zack-förmig abgelegt durch die einzelnen Zonen der Nachbehandlungsstrecke befördert.

Nach dem Glühofen wird das Stapelfaser-Vorgarn mit etwa 1% Schlichte versehen als notwendiger Schutz wegen der Scheuerempfindlichkeit und um die Haftung der Filamente untereinander in Hinblick auf das Aufspulen und die textile Verarbeitung zu erhöhen. Als Schlichte kann auch die in der DE-PS 2 900 990 angegebene Präparation verwendet werden.

Das Verwirbeln der Kieselsäurestapelfaser-Vorgarne in Blasdüsen ist grundsätzlich möglich; es ist zu empfehlen, diesen Vorgang unter schonenden Bedingungen durchzuführen, um Bruch der einzelnen Kieselsäurestapelfasern zu vermeiden. Abgesehen von der Verwirbelung können auch Mischgarne mit interessanten Eigenschaften bei der Anwendung hergestellt werden, indem z.B. vor der Blasdüse Filamente oder Garne mit ergänzenden Eigenschaften zugeführt und in der Blasdüse mit dem Kieselsäurestapelfaser-Vorgarn verwirbelt werden.

Entsprechend der Lochzahl der Spinndüse, der gewählten Spinnmasse-Fördermenge, der Abzugsgeschwindigkeit und dem Verhältnis v₁:v₂ kann eine breite Palette an Vorgarn-Feinheiten hergestellt werden. Bei der Festlegung der Garnfeinheit wird man sich an Kundenwünschen und bekannten Normen orientieren: Schwerpunkt dürften Garnfeinheiten um 125 tex und 330 tex darstellen.

Kieselsäurestapelfaser-Vorgarne und daraus hergestellte Kieselsäurestapelfasergarne werden zu Zwirnen, Schnüren, Geflechten und Geweben verarbeitet. Diese textilen Produkte werden insbesondere für Isolations- und Hitzeschutzzwecke bei Temperaturen über 400-500°C, vorzugsweise bis 1100°C, eingesetzt.

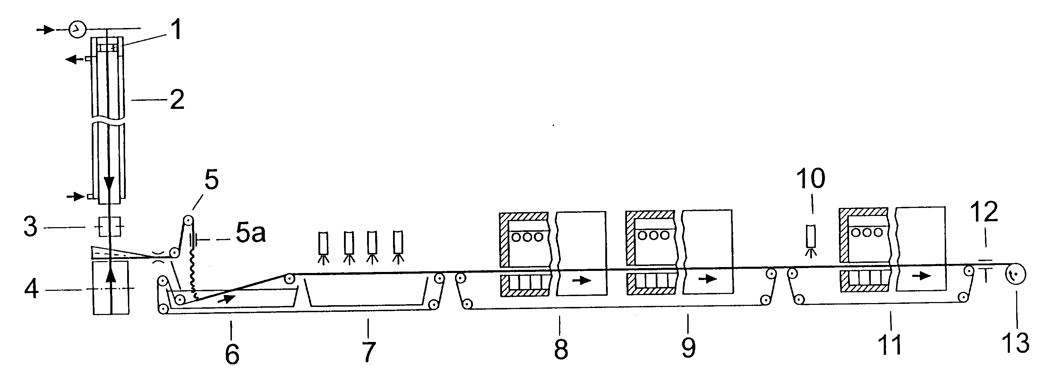

Die Erfindung wird an Hand der Zeichnung näher erläutert: Die Zeichnung zeigt die wesentlichen Merkmale einer Anlage zum Durchführen des erfindungsgemäßen Verfahrens.

Der Wassergehalt der von einer Spinndüse 1 kommenden Wasserglasfilamente wird in einem Trockenschacht 2 mit entgegenströmender Luft auf Werte von etwa 15-30 Gewichtsprozent reduziert. Anschließend wird - z.B. mittels Galettenstein 3 - eine Schlichte aufgetragen. Danach wird das Filamentgarn von einer Abzugstrommel 4 erfaßt und vor einem vollständigen Umlauf von dieser abgehoben, in einer konischen Kammer verwirbelt und seitlich abgezogen. Mittels Fördergaletten 5 und einer Changiereinrichtung - eventuell unterstützt durch eine Injektordüse 5a - wird das gebildete Natronwasserglasstapelfaser-Vorgarn zick-zack-förmig und spannungslos in ein Säurebad, dem Einlauf in die Nachbehandlungsstrecke, befördert. Die Umsetzung erfolgt im Säurebad 6, anschließend wird das gebildete Kieselsäurestapelfaser-Vorgarn in einer Waschzone 7 gewaschen. Das Vorgarn wird danach von einem säurebeständigen Förderband auf ein temperaturbeständiges Förderband gelegt und darauf durch eine Trockenzone 8 und eine Glühzone 9 transportiert. Anschließend erfolgt der Schlichteauftrag 10 und die Nachtocknung 11 der Schlichte. Vor einem Aufspulaggregat 13 kann das Vorgarn in einer Blasdüse 12 gegebenenfalls unter Zuführung eines Garnes mit ergänzenden Eigenschaften verwirbelt werden.

Die Erfindung wird nachfolgend durch einige nicht beschränkende Beispiele näher erläutert. In den Beispielen werden die Bedingungen der in der DE-PS 2 900 991 gegebenen Lehre bezüglich Ansatz der Natronwasserglas-Spinnmasse und bezüglich der Umsetzung im Säurebad und der Nachbehandlungsbedingungen berücksichtigt. Das Haft-Gleit-Verhalten des Kieselsäurestapelfaser-Vorgarnes wird durch den Zusammenschluß der einzelnen Stapelfasern bewirkt und beeinflußt das Verhalten beim textilen Weiterverarbeiten. Die das Haft-Gleit-Verhalten charakterisierende Haftkraft wird mit Hilfe eines Zug-Festigkeitsprüfers durch den in einem Diagramm aufgeschriebenen zeitabhängigen Verlauf der durch den Verzug aufgenommenen Kraft bestimmt.

### Beispiel 1

Natronwasserglas mit einer Molverhältniszahl Na₂O/SiO₂ = 1/2,48 und der Viskosität 240 Pa.s (30°) wird durch zwei Spinndüsen mit je 120 Loch zu Natronwasserglas-Filamentgarn gesponnen. Durch die Abzugstrommel wurde die Abzugsgeschwindigkeit auf 750 m/min eingestellt. Über die Geschwindigkeit der nachfolgenden Galetten wurde das Verhältnis v₁ : v₂ auf 8 festgelegt, sodaß das gebildete Vorgarn mit etwa 94 m/min zick-zack-förmig der Nachbehandlungsstrecke zugeführt wurde. Die Geschwindigkeit der Transportbänder, die das Vorgarndurch die Zonen der Nachbehandlungsstrecke befördern, war 10 m/min. Die Trocknung erfolgte bei etwa 150°C. Geglüht wurde bei ca 800°C.

Am mit Schlichte versehenen Kieselsäurestapelfaser-Vorgarn und an einzelnen Elementarfäden (Stapelfasern) waren folgende Daten gemessen worden:

| | |
|---|---|
| Vorgarn-Feinheit | 275 tex |
| Elementarfaden-Festigkeit | 37 cN/tex |
| Haftfestigkeit (Vorgarn) | 5-6 N |
| Festigkeit (Vorgarn mit Schutzdrehung) | ca 11 cN/tex |

### Beispiel 2

### Spinnbedingungen wie Beispiel 1

Das Natronwasserglasstapelfaser-Vorgarn wurde bei einem Verhältnis v₁ : v₂ von 4 gebildet. Bei den hohen Geschwindigkeiten des Natronwasserglasstapelfaser-Vorgarnes von etwa 190 m/min war eine störungsfreie Nachbehandlung und Aufspulung des Kieselsäurestapelfaser-Vorgarnes nicht möglich. An kurzen Garnabschnitten wurden die folgenden Daten ermittelt:

| | |
|---|---|
| Vorgarn-Feinheit | ca 134 tex |
| Filamentdurchmesser | 9,2µm |
| Elementarfaden-Festigkeit | 40 cN/tex |
| Haftfestigkeit (Vorgarn) | 4-5 N |
| Festigkeit (Vorgarn mit Schutzdrehung) | ca 12 cN/tex |

### Beispiel 3

Natronwasserglasfilamentgarn wurde aus einer Spinndüse mit 120 Loch mit der Geschwindigkeit 1000 m/min abgezogen. Das Vorgarn wurde bei einem Verhältnis v₁ : v₂ von 8 gebildet. Am Kieselsäurestapelfaser-Vorgarn gemessene Daten waren die folgenden:

| | |
|---|---|
| Vorgarn-Feinheit | 135 tex |
| Filamentdurchmesser | 9,1µm |
| Elementarfaden-Festigkeit | 38 cN/tex |
| Haftfestigkeit (Vorgarn) | 5-6 N |
| Festigkeit (Vorgarn mit Schutzdrehung) | ca 10 cN/tex |

### Bezugszeichen Übersicht

- 1: Spinndüse
- 2: Trockenschacht
- 3: Galette für Schlichte
- 4: Abzugstrommel
- 5: Fördergaletten
- 5a: Injektordüse
- 6: Säurebad
- 7: Waschzone
- 8: Trockenzone
- 9: Glühzone
- 10: Sprühdüse für Schlichte
- 11: Trockenofen
- 12: Blasdüse
- 13: Aufspulaggregat

## Patentansprüche

1. Kieselsäurestapelfaser-Vorgarn aus Kieselsäurestapelfasern einer Länge von 50 bis 1000 mm mit einer Festigkeit der einzelnen Faser von 20 bis 50 cN/tex und einer Haftfestigkeit des Vorgarnes von 2 bis 20 N bei dessen Feinheit von 50 bis 2000 tex.

2. Verfahren zur Herstellung von Kieselsäurestapelfaser-Vorgarn nach Anspruch 1, wobei aus wäßrigem Natronwasserglas durch Trockenspinnen ein Natronwasserglasfilamentgarn hergestellt wird, das nach Durchgang durch einen Trockenschacht von einer rotierenden Abzugstrommel mit einer Geschwindigkeit v₁ von mindestens 350 m/min abgezogen wird, dadurch gekennzeichnet, daß das Natronwasserglasfilamentgarn bei einem Verhältnis v₁ : v₂ größer 1 direkt in ein Natronwasserglasstapelfaser-Vorgarn umgewandelt wird, dieses mit einer gegenüber v₁ niedrigeren Geschwindigkeit v₂ der Nachbehandlungsstrecke zugeführt, in dieser kontinuierlich in Kieselsäurestapelfaser-Vorgarn übergeführt, mit einer Schlichte versehen und aufgespult wird.

3. Verfahren nach Anspruch 2, dadurch gekennzeichnet, daß das Natronwasserglasfilamentgarn mit einer Geschwindigkeit v₁ von 600 bis 1200 m/min abgezogen wird.

4. Verfahren nach Anspruch 2 und 3, dadurch gekennzeichnet, daß das Natronwasserglasfilamentgarn vor der Abzugstrommel mit einer in Säure leicht löslichen Schlichte versehen wird.

5. Verfahren nach Anspruch 2 bis 4, dadurch gekennzeichnet, daß das Natronwasserglasstapelfaser-Vorgarn mit einer Geschwindigkeit v₂ unter 200 m/min von der Abzugstrommel kommend direkt und zick-zack-förmig dem Einlauf der Nachbehandlungsstrecke zugeführt wird.

6. Verfahren nach Anspruch 2 bis 5, dadurch gekennzeichnet, daß ein Verhältnis v₁ : v₂ von 5 bis 10 gewählt wird.

7. Verfahren nach Anspruch 2 bis 6, dadurch gekennzeichnet, daß der Transport des Natronwasserglasstapelfaser-Vorgarnes von der Abzugstrommel zum Einlauf in die Nachbehandlungsstrecke durch Galetten und eventuell einen Luftstrom aus einer Injektordüse unterstützt wird.

8. Verfahren nach Anspruch 2 bis 7, dadurch gekennzeichnet, daß das Natronwasserglasstapelfaser-Vorgarn im Säurebad der Nachbehandlungsstrecke kontinuierlich in Kieselsäurestapelfaser-Vorgarn umgewandelt, anschließend gewaschen, getrocknet und geglüht wird.

9. Verwendung des Kieselsäurestapelfaser-Vorgarnes nach Anspruch 1 zum Herstellen von Stapelfasergarnen.

10. Verwendung des Kieselsäurestapelfaser-Vorgarnes nach Anspruch 1 zum Herstellen von Zwirnen, Schnüren, Geflechten und Geweben für die Anwendung insbesondere bei Temperaturen über 400-500°C.

## Claims

1. Textile silica sliver consisting of silica staple fibres 50-1000 mm long, the single fibres having a breaking tenacity of 20-50 cN/tex and the textile silica sliver types having, at a linear density of 50-2000 tex, a maximum drawing force of 2 to 20 N.

2. The process for manufacturing textile silica slivers according to Claim 1 thereby manufacturing a sodium silicate filament yarn from a manufactured aqueous sodium silicate solution by the dry spinning process which immediately after the drying chimney is drawn off by a rotating drawing drum with a speed V₁ of at least 350 m/min, characterized by the sodium silicate filament yarn being directly transformed to a sodium silicate sliver at the ratio V₁ : V₂ greater than 1, and this sodium silicate sliver being transported into the entrance of the following post treatment line with, in comparison to V1, the lower speed V₂ and being continuously transformed into textile silica slivers and being as such - supplied with a standard textile size - wound on to bobbins.

3. The process according to Claim 2, characterized by the spinning speed of the sodium silicate filament yarn V₁ being 600 to 1200 m/min.

4. The process according to Claims 2 and 3 characterized by the sodium silicate filament yarn being lubricated with textile size prior to the drawing drum, said size being easily soluble in the acid bath.

5. The process according to Claims 2 to 4 characterized by the sodium silicate sliver being transported directly from the drawing drum at a speed of V₂ less than 200 m/min and being fed in zig-zags to the entrance of the post treatment line.

6. The process according to Claims 2 to 5 characterized by a drawing ratio V₁ : V₂ of 5 to 10 being selected.

7. The process according to Claims 2 to 6 characterized by the transportation of the sodium silicate sliver from the drawing drum to the entrance of the post treatment line being supported by godets and possibly by a flow of air from an air injector nozzle.

8. The process according to Claims 2 to 7 characterized by the sodium silicate sliver being transformed continuously into silica sliver in the acid bath of the post treatment line and thereafter washed, dried and calcinated.

9. The use of textile silica slivers according to Claim 1 for the manufacture of silica staple fibre yarn.

10. The use of textile silica slivers according to Claim 1 for the manufacture of twisted yarns, cords, braidings and fabrics for application particularly at temperatures higher than 400-500 °C.

## Revendications

1. Ruban de fibres de silice d'une longueur de 50 à 1000 mm, chaque fibre ayant une résistance à la rupture par traction de 20 à 50 cN/tex et le ruban présentant une force d'adhérence de 2 à 20 N à un titre de 50 à 2000 tex.

2. Procédé de fabrication de rubans de fibre de silice selon la revendication 1 au cours duquel est produit à partir d'une solution aqueuse de silicate de sodium par filage à sec un fil de filament de silicate de sodium qui, après avoir traversé une cheminée de séchage, est tiré par un tambour de tirage rotatif à une vitesse v₁ d'au moins 350 m/min; procédé caractérisé par le fait que le fil de filament de silicate de sodium est transformé à un rapport v₁ : v₂ supérieur à 1 directement en un ruban de fibres de silice, celui-ci est amené à une vitesse v₂ inférieure à v₁ directement à l'installation de traitement postérieur, il est transformé en continu dans celle-ci en un ruban de fibres de silice, pourvu d'un ensimage et embobiné.

3. Procédé selon la revendication 2 caractérisé par le fait que le fil de filament de silicate de sodium est retiré à une vitesse v₁ de 600 à 1200 m/min.

4. Procédé selon les revendications 2 et 3 caractérisé par le fait que le fil de filament de silicate de sodium est pourvu devant le tambour de tirage d'un ensimage facilement soluble à l'acide.

5. Procédé selon les revendications 2 à 4 caractérisé par le fait que le ruban de fibres en silicate de sodium venant du tambour de tirage est amené à une vitesse v₂ inférieure à 200 m/min directement et en zigzag à l'entrée de l'installation de traitement postérieur.

6. Procédé selon les revendications 2 à 5 caractérisé par le fait que la valeur choisie du rapport v₁ : v₂ est de 5 à 10.

7. Procédé selon les revendications 2 à 6 caractérisé par le fait que le transport du ruban de fibres de silicate de sodium du tambour de tirage vers l'entrée de l'installation de traitement postérieur est effectué à l'aide de galettes et éventuellement d'un courant d'air provenant d'une buse d'injecteur.

8. Procédé selon les revendications 2 à 7 caractérisé par le fait que le ruban de fibres de silicate de sodium est transformé en continu en un ruban de fibres de silice dans le bain acide de l'installation de traitement postérieur, pùis lavé, séché et calciné.

9. Utilisation des rubans de fibres de silice selon la revendication 1 pour la fabrication de fils.

10. Utilisation des rubans de fibres de silice selon la revendication 1 pour la fabrication de retors, cordons, tresses et tissus pour des applications en particulier à des températures au-delà de 400 - 500°C.
